# EUROPEAN PATENT APPLICATION

(11) **EP 3 878 622 A1**
(43) Date of publication of application: **15.09.2021**
(21) Application number: 20162133.1
(22) Date of filing: 10.03.2020
(51) Int. Cl.: B29C 45/16, B29C 45/26, B29C 45/00, B29C 45/28

(54) **TOOL FOR INJECTION MOULDING, USES THEREOF AND PARTS PRODUCED WITH SUCH A TOOL**

(71) Applicant: Adval Tech Holding AG, 3172 Niederwangen (CH)
(72) Inventor: GÖBEL, Markus, 6280 Hochdorf (CH)
(74) Representative: Bremi, Tobias Hans

(57) **Abstract**

Method for injection moulding of a product (5) from at least one thermoplastic material using a production tool (13) with a moulding cavity (16), comprising at least the steps of:
a) providing said moulding cavity (16) defining the full three-dimensional outer boundary of said product (5);
b) introducing at least one slider (7) into said moulding cavity (16) so as to separate said moulding cavity (16) into at least two areas (16', 16") which are separated a transverse direction, defining at least one first separated volume (16') and at least one second separated volume (16");
c) injecting said thermoplastic material into only said at least one first separated volume (16');
d) retracting said at least one slider (7) from said moulding cavity (16);
e) injecting of the same thermoplastic material into said at least one second separated volume (16") and remaining non-filled volume due to the volume of the slider (7);
f) allowing said thermoplastic material to solidify;
g) opening said moulding cavity (16) and removing said product (5) from the moulding cavity (16).

## Description

### TECHNICAL FIELD

The present invention relates to methods for producing large products using thermoplastic material, in particular for the automobile sector. Furthermore, the present invention relates to uses of such methods, to devices for carrying out such methods as well as to products made using these methods.

### PRIOR ART

In the auto mobile industry an increasing number of parts is not based on metal any more but on plastics, in particular on thermoplastic materials, if need be reinforced by glass fibers or carbon fibers for increasing mechanical properties. The corresponding production processes are highly automated and are carried out at high speeds.

Problems may arise in these automated production processes if the parts to be produced have a large extension, for example in case of underfloor panels, because of warping and because of the high closure forces required for the corresponding production tools making corresponding equipment very expensive and difficult to handle.

### SUMMARY OF THE INVENTION

It is the object of the present invention to provide for a new method for manufacturing products from a thermoplastic material, allowing for production tools with low closure forces but allowing for high production speeds, and the production of large parts with a large surface area. Furthermore it is the object of providing such a method allowing for a modular design of the corresponding products in the sense that one general tool base can be used with tool cassettes which tool cassettes are adapted to the particular product, which is desired. This is particularly important in the automobile industry because more and more, also large parts are type-wise to be adapted depending on the specific configuration of the car to be produced.

It is one of the gists of the present invention, that in contrast to the prior art methods, which involved individual making of parts of a final product, such as an underfloor panel, and then handling these parts and joining them in separate steps to the final product, the proposed method allows for producing such large parts in one single injection moulding tool. This without warping problems, and without high closure forces and the associated difficult handling and expensive equipment.

More specifically, the present invention relates to a method for injection moulding of a product from at least one thermoplastic material using a production tool with a moulding cavity.

Said moulding cavity is defined by a core side form plate surface and a cavity side form plate surface in the closed state of said production tool, said core side form plate surface and said cavity side form plate surface extending along transverse x- and y-directions. The core side form plate and/or the cavity side form plate can be moved along a z-direction and/or a -z-direction for opening said moulding cavity.

Said product preferably has a minimum extension in a x/y plane defined by the said x- and y-directions, which is more than five times larger than its maximum extension in the z-direction perpendicular to said x/y plane. When talking about this minimum extension, this means that the extension is taken along this plane, so if the product has a complex three-dimensional shape, this minimum extension is the corresponding projection of that shape into this x/y plane. Also when talking about the surface area of the corresponding product or of parts thereof, this is the surface area as projected into this x/y plane. As for the extension in the z-direction, this is to be taken perpendicular to the x/y plane. The coordinate system is defined by the opening direction of the processing tool, defining the z-axis of the coordinate system.

According to the proposed invention, the method comprises at least the steps of (or preferably consists of these steps):
a) providing said moulding cavity defining the full three-dimensional outer boundary of said product;
b) introducing at least one slider into said moulding cavity so as to separate said moulding cavity into at least two areas which are separated a transverse direction, defining at least one first separated volume and at least one second separated volume;
c) injecting said thermoplastic material into only said at least one first separated volume;
d) retracting said at least one slider from said moulding cavity;
e) injecting said thermoplastic material into said at least one second separated volume and remaining non-filled volume due to the volume of the slider;
f) allowing the thermoplastic material to solidify;
g) opening said moulding cavity and removing said product from the moulding cavity.

The use of the sliders for separating the cavity into individual separated parts allows for manufacturing of large parts without need of high closure forces in one single production tool.

According to a first preferred embodiment, there is provided a pair of sliders, separating the moulding cavity into a pair of individual contiguous first separated volumes located at opposite transverse sides, and a single contiguous central separated volume. Either in step c) said first separated volumes are filled and in step e) said single contiguous central separated volume is filled, or in step c) said single contiguous central separated volume is filled and in step e) said first separated volumes are filled.

Preferably the surface area in the x/y plane of each of said pair of individual contiguous first separated volumes is essentially the same or differs by no more than 20%, preferably by no more than 10% or no more than 5% or no more than 2%, allowing for a well-balanced load on the production tool.

Alternatively or additionally, and preferably, the surface area in the x/y plane of said single contiguous central separated volume is essentially the same or differs by no more than 20%, preferably by no more than 10% or no more than 5% or no more than 2%, from the sum of the surface areas in the x/y plane of both of said pair of individual contiguous first separated volumes. Again, this allows for a well-balanced load on the production tool. Preferably the surface area in the x/y plane of each of said pair of individual contiguous first separated volumes (16') is larger than zero, preferably in the range of larger than 0.1 m², or in the range of 0.15-0.25 m² or in the range of 0.25-0.25 m².

Alternatively, there is provided one single slider separating the moulding cavity into a single contiguous central separated volume and a single contiguous circumferential separated volume located around said central separated volume, and wherein either in step c) said circumferential separated volume is filled and in step e) said single contiguous central separated volume is filled, or in step c) said single contiguous central separated volume is filled and in step e) said circumferential separated volume is filled. This circular or co-centric stepwise manufacturing allows a well-balanced load on the production tool and the manufacturing of large parts without high closure forces.

Again alternatively, there can be provided at least one slider separating the moulding cavity into a pair of individual contiguous first separated volumes located at opposite transverse sides along a first diagonal, and a pair of individual contiguous second separated volumes located at opposite transverse sides along a second diagonal (the slider in this case is basically cross -shaped), and wherein either in step c) said first separated volumes are filled and in step e) said second separated volumes are filled, or in step c) said second separated volumes are filled and in step e) said first separated volumes are filled.

According to another preferred embodiment, the method consists of steps a)-g) and in step e) the full remaining volume of the product is injection molded.

It is however also possible to split the process even further, in that there is provided a first group of sliders as well as at least one further group of sliders, wherein at least said first group of sliders is used for carrying out steps b)-d), and said further group of sliders is used for repeating steps b-d) as often as there is groups of sliders, followed after that by steps f) and g).

As mentioned above, the process is particularly suitable and adapted for situations where large essentially flat parts need to be produced. According to a preferred embodiment therefore the total surface area of the product in the x/y plane is larger than 0.5 m², preferably larger than 0.7 m² or larger than 0.8 m².

According to another preferred embodiment, the product has a minimum extension in an x/y plane defined by said x- and y-directions, which is more than five times, preferably more than 10, 20 or 50 times larger, than its maximum extension in the z-direction perpendicular to said x/y plane.

Preferably, the total volume of the product is larger than 1000 cm³, preferably larger than 1500 cm³, more preferably larger than 1800 cm³.

The minimum extension of the product in the in the x/y plane is preferably more than 50 cm, preferably more than 70 cm, particularly preferably more than 100 cm.

The maximum extension of the product in the z-direction is preferably 15 cm, preferably it is less than 15 cm, more preferably less than 10 cm or les than 5 cm.

According to yet another preferred embodiment the minimum extension of the product in the in the x/y plane is more than 50 cm, preferably more than 70 cm, particularly preferably more than 100 cm.

According to another preferred embodiment the maximum extension of the product in the z-direction is 15 cm, preferably it is less than 15 cm, more preferably less than 10 cm or 5 cm.

As also mentioned above, it is one of the aims of the present invention to have low closure forces in the injection steps. According to yet another preferred embodiment therefore the closure force of the production tool during step c) as well as step e) is below 10 kN, preferably below 9 kN or even below 8 kN.

In step g) an ejector can be used for pushing the product out of one half of the cavity, and preferably during or after that step the product is taken over by an automatic handling system.

Typically, the thermoplastic material is a polymer material selected from the group of polyolefin, such as polyethylene, polypropylene, polybutylene, polyurethane, polyamide, polycarbonate, ABS, PVC, PMMA, PET, PBT, POM, or a mixture or a copolymer of these, wherein preferably the thermoplastic material contains a filler selected from the group of fibers, including glass fibers, carbon fibers, particulate filler, wherein preferably the filler content (preferably given only by particulate filler) is in the range of 10-60%, as well as optionally further additives, wherein preferably the additive content is in the range of less than 5%.

For the individual injection steps, different materials can be used if different properties for the different areas of the product are desired. However preferably one same thermoplastic material, which is typically a non-elastomeric material, is used for the whole of the product at least for the main surface, in edge regions they can also be additional, separately injection molded smaller regions of elastomeric material, which can also be produced in the same mold by way of additional separate sliders in separate steps.

Furthermore, the present invention relates to the use of a method as defined above in an automated manufacturing process for said products by automatically repeating said steps as a function of the number of products to be produced.

Also the present invention relates to a production tool for carrying out the method as defined above, wherein the production tool comprises at least a cavity side tool base support plate and a core side tool base support plate, as well as a pair of tool cassette form plates and tool cassette shutdown sliders, wherein preferably the production tool is suitable and adapted to carry and work with different tool cassette form plates and tool cassette shutdown sliders depending on the product to be produced.

The elements for actuating the sliders in the tool base can be located such that for the largest products to be produced the sliders separate the cavity into two opposed lateral partial cavities of essentially the same area in the x/y plane, and a central cavity (1between the two lateral partial cavities, having essentially the same area in the x/y plane as the sum of the two lateral partial cavities.

The tool cassette form plates can be structured such that the cavity for the product is given to a maximum extent by the central cavity, and that the remaining surface area of the product is essentially equally distributed in the opposed lateral partial cavities. Furthermore, the present invention relates to the use of a production as detailed above for the manufacturing of products of different shapes preferably using a method, wherein for each different shape a different set of tool cassette form plates is used, and wherein the tool cassette form plates are structured such that the cavity for the product is given to a maximum extent by the central cavity, and that the remaining surface area of the product is essentially equally distributed in the opposed lateral partial cavities.

The production tool is thus preferably of a modular structure allowing for in time production depending on the needs, in that a tool base provided which remains unchanged, and tool cassettes defining the respective cavity for the respective desired product. The idea behind this aspect is to locate the sliders in the tool base in a position allowing for optimum closure force values essentially independent from the shape of the product which is produced. The product is located in a central region up to a maximum surface area leading to the maximum closure force which the tool can withstand. As long as small products are produced the sliders are not used. As soon as the product is getting larger than this maximum surface area, parts of the product area are located in the lateral areas which can be separated by the sliders and produced in the second step. The product area overlapping over the central region is equally distributed in these lateral regions to make sure that there is no imbalanced load on the tool in the second production step for producing those lateral regions of the product. The maximum area of the product is reached once the area of both lateral regions reaches a value leading to the maximum closure force which the tool can withstand.

Last but not least the present invention relates to a product made using a method as defined above or using a production tool as detailed above, wherein said product consists of a thermoplastic material and is preferably selected from the group of or to mobile part, including cover plate, underfloor panel, or parts thereof.

Further embodiments of the invention are laid down in the dependent claims.

### BRIEF DESCRIPTION OF THE DRAWINGS

Preferred embodiments of the invention are described in the following with reference to the drawings, which are for illustrating the present preferred embodiments of the invention and not for limiting the same. In the drawings,
- Fig. 1: shows in a) a perspective view onto the closed production tool and in b) a perspective view on the open production tool
- Fig. 2: shows in the explosion view the individual parts of the production tool;
- Fig. 3: shows the individual steps in the injection moulding process;
- Fig. 4: shows the modular design made available;
- Fig. 5: shows the pressure behaviour in the individual injection moulding steps.

### DESCRIPTION OF PREFERRED EMBODIMENTS

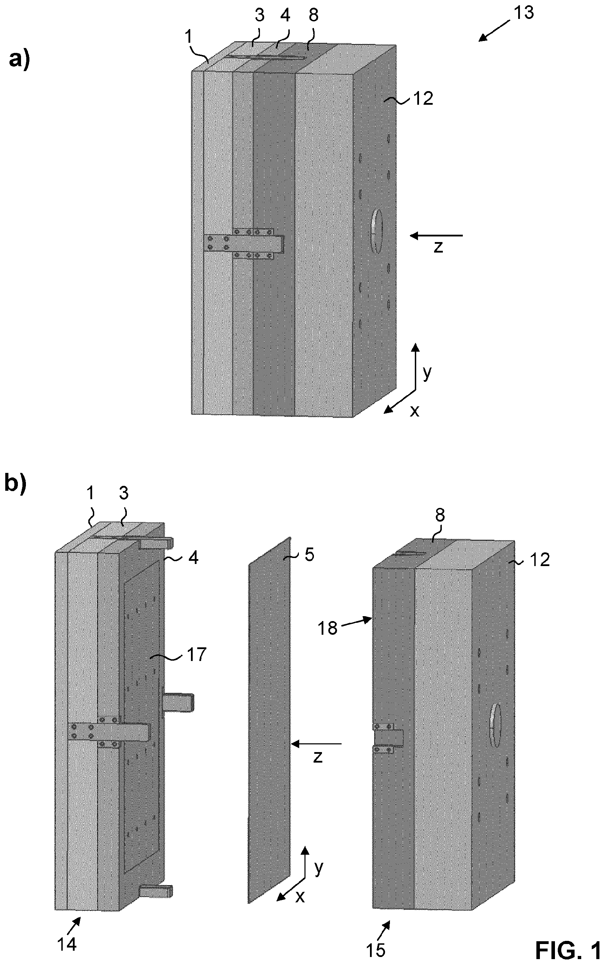

**Figure 1** shows a perspective view onto a production tool 13 in the closed state in (a), and in the open state (b). The production tool 13 comprises two lateral outer plates, namely the cavity side tool base support plate 1 and on the other side the core side tool base support plate 12. Between those two plates 1 and 12, which make up the main part of the actual tool base which is not changed for different products to be produced, there is located a cavity side tool base intermediate plate 3, also being part of the tool base, and then followed by the cavity side tool cassette form plate 4, which defines the cavity side form plate surface 17 and thus the cavity side of the actual molding cavity 16.

The product 5 is schematically illustrated in the open representation in (b).

Also schematically illustrated are the directions as defined in this application, the directions x and y designate at the lateral directions extending essentially along the parallel planes of the tool plates 1, 12 and also along the actual product 5, and the z-axis is the opening direction of the tool. The core side tool base support plate 12 is shifting in the -z-direction for opening of the tool and the cavity side tool base support plate 1 and the cavity side tool base intermediate plate 3 remain stationary.

On the side facing the cavity side, the core side tool cassette form plate 8 is provided with the core side form plate surface 18 bordering, together with the cavity side form plate surface 17, the actual molding cavity 16 defining the outer boundary of the product 5.

The surface area, for a maximum product 5 in this case is an area of 1200mm x 800mm, thus defining an area of 0.96m², and assuming an average thickness of the product of 2mm the product has a volume of somewhat less than 2000cm³.

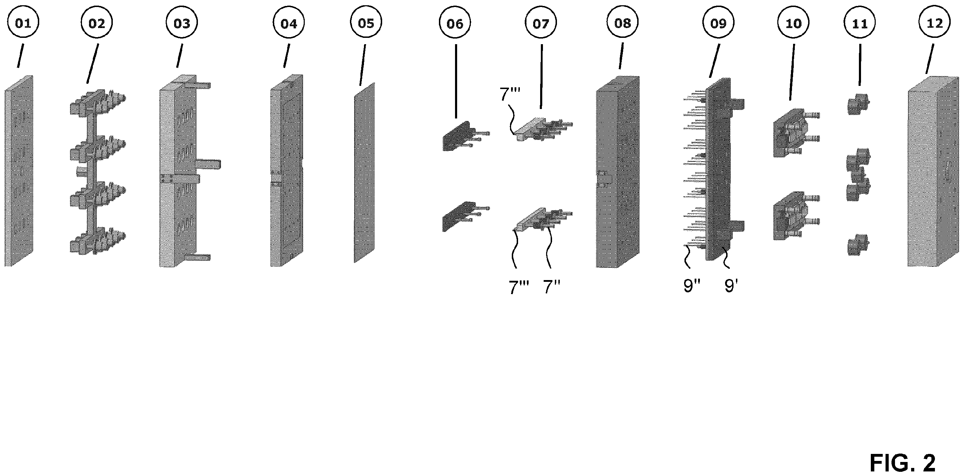

**Figure 2** shows the tool in more detail in terms of its individual components in an explosion view. On the left side, there is the cavity side tool base support plate 1. At least partially embedded that tool cavity side tool base support plate 1 there is provided the tool base hot runner system 2, which in this case comprises 16 shut down nozzles. The nozzles are needle nozzles, each of the nozzles can individually be triggered by retracting the corresponding needle if the corresponding area is to be supplied with injection molding material. The tool base hot runner system 2 also penetrates the cavity side tool base intermediate plate 3 which also forms part of the tool base, i.e. the elements 1-3 define the cavity side elements of the tool base which are independent of the product and remain unchanged for different products to be produced in this tool.

The tool base on the core side starts with the core side tool base support plate 12 on the very right, with the tool base support 11. Importantly, within this core side tool base there are located the tool base hydraulic systems 10 for the shutdown sliders 7. These tool base hydraulic systems 10 for the shutdown sliders 7 are located in a position along the y direction to separate the tool in the y direction into a central part, and two lateral parts, on the upper and lower side, respectively. Essentially, the area of the two lateral parts is the same for each of the parts, and the sum of these two lateral parts is essentially identical to the central part between the two tool base hydraulic systems 10 for the shutdown sliders. In other words, these tool base hydraulic systems 10 for shut down sliders are located at height along the y direction of ¼ and ¾ of the y direction.

Also part of the tool base is the tool base hydraulic ejector system 9, comprising the actual ejector plate 9' as well as a number of ejector pins 9", and which is used for ejecting the final product from the cavity during and/or after opening of the cavity.

Between the cavity side tool base elements 1-3 and the core side tool base elements 9-12 there are located the actual tool cassette elements, which are built individually depending for each product type to be produced.

The tool cassette comprises the cavity side tool cassette form plate 4 and the core side tool cassette form plate 8. Importantly, embedded in the tool cassette form plate 8 there are located the tool cassette shut down sliders 7. The sliders are located each in a depression 7' in the core side tool cassette form plate 8 and each are actuated by way of the slider bars 7", which penetrate the core side tool cassette form plate 8 and are actuated by the tool base hydraulic system 10 for shut down sliders.

Each of the tool cassette shut down sliders 7 is covered on the cavity side by a tool cassette cover plate 6 for the shut down sliders. These cover plates 6 close the depression 7' at the level of the surface of the cavity 16 and only leave open a small slot, which allows for the actual slider blade 7''' to penetrate through the surface 18 of the cavity side form plate for the first method step of injection moulding either just the lateral or just the central part of the product, and thus to separate the central part from the lateral parts of the cavity for e.g. the second production step.

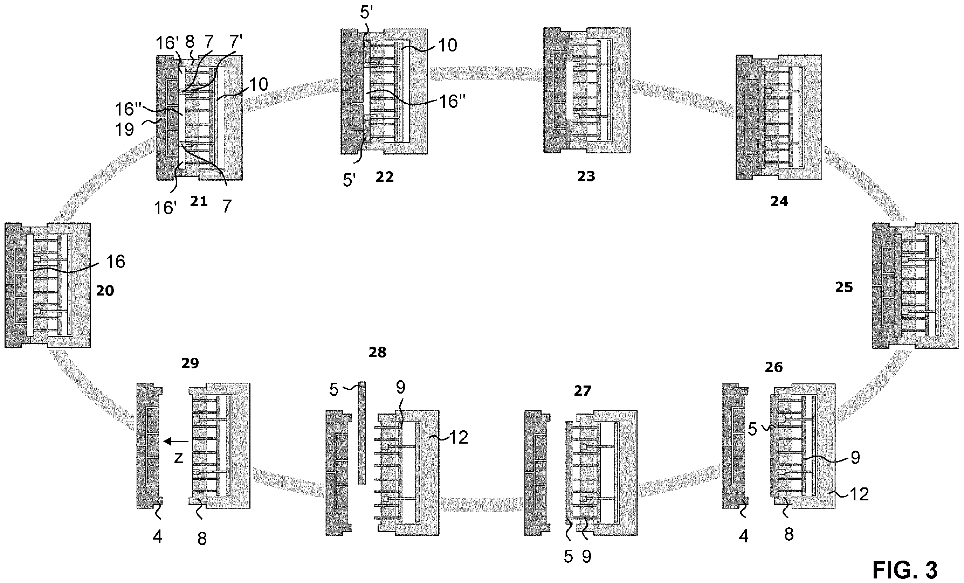

**Figure 3** illustrates schematically the individual manufacturing steps of the method as proposed here. Starting with the tool close situation 20, one can see that the core side and the cavity side are maximally close and are defining the actual cavity 16.

In the next step 21 of movement 01, the sliders 7 are activated and shifted into the cavity, separating the full cavity 16 into two lateral cavities 16' and a central cavity 16".

In the following injection 01 step 22, the lateral cavities 16' are filled by way of activating the channels 19 for the thermoplastic material, i.e. the tool base hot runner-system 2 by retracting the needles of the needle valves of the two lateral (uppermost and lowermost) rows of injection molding material nozzles. The outer injection molded parts 5' are present in the lateral regions at the end of this first injection step 22.

Without delay and without essentially allowing the injection material in the lateral parts 5' to solidify, the sliders are retracted as illustrated in step 23, thereby allowing the remaining volume of the cavity 16" (plus the small volume of the sliders) to be filled.

This is effected in injection step 02 illustrated in 24, the central two rows of nozzles of the tool base hot runner-system 2 are now activated and the final central portion of the product 5 is injection molded. The lateral portions 5' still being soft and not solidified a firm bond is established between both regions of the product, which have been produced in individual steps.

Subsequently in step 25 the product is allowed to cool by keeping the form still closed.

In the following step 26 the tool is opened by retracting the core side along the -z-direction (or by shifting the cavity side away along z).

The product 5 is then (or during opening) ejected from the cavity by moving the tool base hydraulic ejector system as illustrated in step 27.

While or after the ejector system is activated, the product 5 is taken over by an automatic handling system (not shown) and is taken out of the form in the product demolding step illustrated in 28.

The cycle is then closed by retracting the ejector system as illustrated in step 29 and by again closing the form, for the transformation from the situation 29 into the situation 20 again.

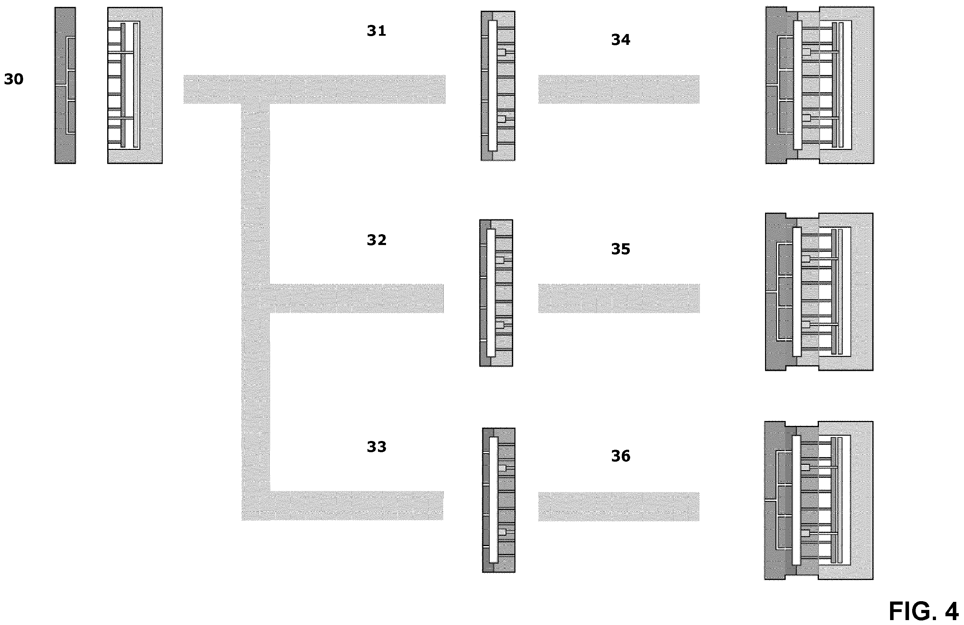

The proposed scheme allows for a very useful modular architecture of the production tool. As illustrated in **figure 4****,** for one tool base 13, different tool cassettes for different products A-C schematically given by 31-33 are possible and can be operated by using the same tool base, i.e. using the same mechanical elements for the ejector and the base elements for the shutdown sliders. The cassettes 31-33 essentially only consist of the tool cassette form plates 4, 8 and the corresponding tool cassette shut down sliders 7, which are adapted to the corresponding product, leading to production tool configurations 34-36 depending on the type of product A-C.

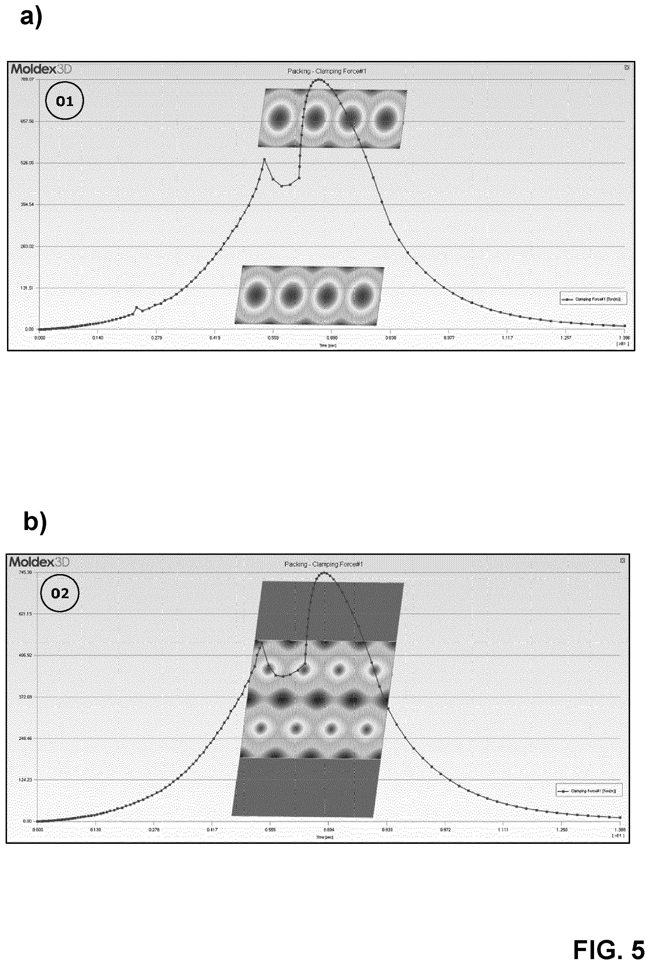

**Figure 5** shows the clamping forces for the individual phases of the injection molding process step 01 in a) for injection molding the two lateral control regions 5' in the cavity parts 16', while the lower graphic in 5b illustrates the clamping force behavior during injection molding of the central part given by the second separated volume 16".

As one can see from these representations, the clamping force never exceeds 800 tons in the first injection molding step when the shutdown sliders are in the out position and are separating the cavity. No cooling takes place after this first step and is directly followed by the second step, basically the time between two injection molding steps is given only by the time needed for retracting the shutdown sliders out of the cavity.

Again, also for the second injection molding step the maximum clamping force never exceeds 800 tons.

By using this proposed strategy for a given maximum clamping force of a tool, a maximum size of a product of the same material is made available which is twice as large as one would expect, since the process is basically separated into two different phases, each making use of the maximum clamping force and producing a maximum area of the product to be made.

To allow for a maximum adaptability of the tools, a central region is designed which is as large as possible in area so that if that central area is used to full extent a maximum clamping force of the tool is reached. Only if the product becomes larger, then the central area as well as the lateral areas are used in as far as necessary. When using the lateral areas, care should be taken such that the area which reaches beyond the central area into these lateral areas is equally distributed in these lateral areas to avoid imbalanced clamping conditions in the first injection molding step producing these lateral areas. The maximum area of these lateral areas is given by the same area as for the central area, i.e. the sum of the two lateral areas is chosen such that if the lateral areas are injection molded also the maximum clamping force the cool can withstand is reached. This leads to a condition that the area of the sum of the two lateral areas is essentially the same as the total of the central continuous area.

**LIST OF REFERENCE SIGNS**

| | | | |
|---|---|---|---|
| 1 | cavity side tool base support plate, | 9" | ejector pins |
| | | 10 | tool base hydraulic system |
| 2 | tool base hot runner-system (16 x shut down nozzles) | 11 | for shut down sliders tool base support |
| 3 | cavity side tool base intermediate plate | 12 | core side tool base support plate |
| 4 | cavity side *tool cassette* form plate | 13 14 | production tool cavity side |
| 5 | product (underfloor panel) | 15 | core side |
| 5' | first injection moulded part of 5 defined by 16' | 16 | moulding cavity |
| | | 16' | first separated volume |
| 5" | final injection moulded part defined by 16" | 16" | second separated volume |
| | | 17 | cavity side form plate surface |
| 6 | *tool cassette* cover plates shut down sliders | 18 19 | core side form plate surface channels for thermoplastic material |
| 7 | *tool cassette* shut down sliders | 20 | tool close |
| 7' | depression in 8 for 7 | 21 | movement 01; core system |
| 7" | slider bar | | out |
| 7''' | slider blade | 22 | injection 01; injection hard component |
| 8 | core side *tool cassette* form plate | 23 | movement 02; core system in |
| 9 | tool base hydraulic ejector system | 24 | injection 02; injection hard component |
| 9' | ejector plate | 25 | cooling time hard component |
| 26 | tool open | 32 | tool cassette for product B |
| 27 | movement 03; ejector system out | 33 | tool cassette for product C |
| | | 34 | production tool configuration for product A |
| 28 | product demoulding; handling | | |
| | finished product | 35 | production tool configuration for product B |
| 29 | movement 04; ejector system | | |
| | in | 36 | production tool configuration for product C |
| 30 | tool base; tool base cavity side, tool base core side | | |
| 31 | tool cassette for product A | | |

## Claims

1. Method for injection moulding of a product (5) from at least one thermoplastic material using a production tool (13) with a moulding cavity (16),
said moulding cavity (16) being defined by a core side form plate surface (18) and a cavity side form plate surface (17) in the closed state of said production tool (13), said core side form plate surface (18) and said cavity side form plate surface (17) extending along transverse x- and y-directions, and wherein a core side form plate (8) and/or a cavity side form plate (4) can be moved along a z- and/or along a -z-direction for opening said moulding cavity (16),
wherein the method comprises at least the steps of:
a) providing said moulding cavity (16) defining the full three-dimensional outer boundary of said product (5);
b) introducing at least one slider (7) into said moulding cavity (16) so as to separate said moulding cavity (16) into at least two areas (16', 16") which are separated a transverse direction, defining at least one first separated volume (16') and at least one second separated volume (16");
c) injecting said thermoplastic material into only said at least one first separated volume (16');
d) retracting said at least one slider (7) from said moulding cavity (16);
e) injecting of the same thermoplastic material into said at least one second separated volume (16") and remaining non-filled volume due to the volume of the slider (7);
f) allowing said thermoplastic material to solidify;
g) opening said moulding cavity (16) and removing said product (5) from the moulding cavity (16).

2. Method according to claim 1, wherein there is provided a pair of sliders (7), separating the moulding cavity into a pair of individual contiguous first separated volumes (16') located at opposite transverse sides, and a single contiguous central separated volume (16"), and wherein
either in step c) said first separated volumes (16') are filled and in step e) said single contiguous central separated volume (16") is filled,
or in step c) said single contiguous central separated volume (16") is filled and in step e) said first separated volumes (16') are filled,
wherein preferably the surface area in the x/y plane of each of said pair of individual contiguous first separated volumes (16') is essentially the same or differs by no more than 20%, preferably by no more than 10%,
and/or wherein preferably the surface area in the x/y plane of said single contiguous central separated volume (16") is essentially the same or differs by no more than 20%, preferably by no more than 10% from the sum of the surface areas in the x/y plane of both of said pair of individual contiguous first separated volumes (16').

3. Method according to claim 1 or 2, wherein there is provided a pair of sliders (7), separating the moulding cavity into a pair of individual contiguous first separated volumes (16') located at opposite transverse sides, and a single contiguous central separated volume (16"), and wherein the surface area in the x/y plane of said single contiguous central separated volume (16") is in the range of 0.35-0.5 m², preferably in the range of 0.45-0.49 m², and
wherein further preferably the surface area in the x/y plane of each of said pair of individual contiguous first separated volumes (16') is larger than zero, preferably in the range of larger than 0.1 m², or in the range of 0.15-0.25 m² or in the range of 0.25-0.25 m².

4. Method according to claim 1, wherein
there is provided one single slider (7) separating the moulding cavity into a single contiguous central separated volume (16") and a single contiguous circumferential separated volume (16') located around said central separated volume (16"), and wherein
either in step c) said circumferential separated volume (16') is filled and in step e) said single contiguous central separated volume (16") is filled,
or in step c) said single contiguous central separated volume (16") is filled and in step e) said circumferential separated volume (16') is filled;
or there is provided at least one slider separating the moulding cavity into a pair of individual contiguous first separated volumes located at opposite transverse sides along a first diagonal, and a pair of individual contiguous second separated volumes located at opposite transverse sides along a second diagonal, and wherein
either in step c) said first separated volumes are filled and in step e) said second separated volumes are filled,
or in step c) said second separated volumes are filled and in step e) said first separated volumes are filled.

5. Method according to any of the preceding claims, wherein said product (5) has a minimum extension in an x/y plane defined by said x- and y-directions, which is more than five times, preferably more than 10, 20 or 50 times larger, than its maximum extension in the z-direction perpendicular to said x/y plane,
and/or wherein preferably the total surface area of the product (5) in the x/y plane is larger than 0.5 m², preferably larger than 0.7 m² or larger than 0.8 m²,
and/or wherein the total volume of the product (5) is larger than 1000 cm³, preferably larger than 1500 cm³, more preferably larger than 1800 cm³.
and/or wherein the minimum extension of the product in the in the x/y plane is more than 50 cm, preferably more than 70 cm, particularly preferably more than 100 cm,
and/or wherein the maximum extension of the product in the z-direction is 15 cm, preferably it is less than 15 cm, more preferably less than 10 cm or les than 5 cm,
and/or wherein the closure force of the production tool during step c) as well as step e) is below 10 kN, preferably below 9 kN.

6. Method according to any of the preceding claims, wherein the method consists of steps a)-g) and in step e) the full remaining volume of the product (5) is injection moulded,
or wherein there is provided a first group of sliders as well as at least one further group of sliders, and wherein at least said first group of sliders is used for carrying out steps b)-d), and said further group of sliders is used for repeating steps b-d) as often as there is groups of sliders, followed after that by steps f) and g).

7. Method according to any of the preceding claims, wherein in step g) an ejector is used for pushing the product (5) out of one half (8) of the cavity (16), and preferably during or after that step the product (5) is taken over by an automatic handling system.

8. Method according to any of the preceding claims, wherein the thermoplastic material is a polymer material selected from the group of polyolefin, such as polyethylene, polypropylene, polybutylene, polyurethane, polyamide, polycarbonate, ABS, PVC, PMMA, PET, PBT, POM, or a mixture or a copolymer of these, wherein preferably the thermoplastic material contains a filler selected from the group of fibres, including glassfibers, carbon fibres, particulate filler, including silicates, such as talcum, carbonates such as calciumcarbonate, wherein preferably the filler content is in the range of 10-60%, as well as optionally further additives, wherein preferably the additive content is in the range of less than 5%.

9. Use of a method according to any of the preceding claims in an automated manufacturing process for said products (5) by automatically repeating said steps as a function of the number of products (5) to be produced.

10. Production tool (13) for carrying out the method according to any of the preceding claims, wherein the production tool comprises at least a cavity side tool base support plate (1) and a core side tool base support plate (12), as well as a pair of tool cassette form plates (4, 8) and tool cassette shutdown sliders (7), wherein preferably the production tool is suitable and adapted to carry and work with different tool cassette form plates (4,8) and tool cassette shutdown sliders (7) depending on the product (5) to be produced.

11. Production tool (13) according to claim 10, wherein the elements (10) for actuating the sliders (7) in the tool base (12) are located such that for the largest products (5) to be produced the sliders (7) separate the cavity into two opposed lateral partial cavities (16') of essentially the same area in the x/y plane, and a central cavity (16") between the two lateral partial cavities (16'), having essentially the same area in the x/y plane as the sum of the two lateral partial cavities (16').

12. Production tool (13) according to any of the preceding claims 10-11, wherein the tool cassette form plates (4, 8) are structured such that the cavity (16) for the product is given to a maximum extent by the central cavity (16"), and that the remaining surface area of the product (5) is essentially equally distributed in the opposed lateral partial cavities (16').

13. Use of a production tool according to any of the preceding claims 10-12 for the manufacturing of products (5) of different shapes using a method according to any of the preceding claims 1-8, wherein for each different shape a different set of tool cassette form plates (4, 8) is used, and wherein the tool cassette form plates (4, 8) are structured such that the cavity (16) for the product is given to a maximum extent by the central cavity (16"), and that the remaining surface area of the product (5) is essentially equally distributed in the opposed lateral partial cavities (16').

14. Product (5) made using a method according to any of the preceding claims 1-8 and/or using a production tool (13) according to any of claims 10-12, wherein said product (5) consists of one single thermoplastic material and is preferably selected from the group of or to mobile part, including cover plate, underfloor panel, or parts thereof.
